(19) **Europäisches Patentamt**

**European Patent Office**

**Office européen des brevets**

(11) **EP 0 907 086 B1**

(12) **FASCICULE DE BREVET EUROPEEN**

(45) Date de publication et mention
de la délivrance du brevet:
**23.07.2003 Bulletin 2003/30**

(51) Int Cl.⁷: **G01T 1/17**

(21) Numéro de dépôt: **98402391.1**

(22) Date de dépôt: **29.09.1998**

(54) **Dispositif de mesure du temps de montée de signaux parasites par des bruits, provenant de détecteurs de rayonnements gamma ou x**

Vorrichtung zum Messen der Aufsteigszeit von verrauschten Signalen von Gamma- oder Röntgendetektoren

Device for measuring the rise-time of signals containing noise, arriving from gamma- or x-ray detectors

(84) Etats contractants désignés:
**DE GB IT**

(30) Priorité: **01.10.1997 FR 9712214**

(43) Date de publication de la demande:
**07.04.1999 Bulletin 1999/14**

(73) Titulaire: **COMMISSARIAT A L'ENERGIE ATOMIQUE**
**75015 Paris (FR)**

(72) Inventeurs:
• **Bonnefoy, Jean-Paul**
**38100 Grenoble (FR)**
• **Monnet, Olivier**
**38210 Tullins (FR)**
• **Rostaing, Jean-Pierre**
**38470 Vinay (FR)**

(74) Mandataire: **Audier, Philippe André et al Brevalex,**
**3, rue du Docteur Lancereaux**
**75008 Paris (FR)**

(56) Documents cités:
**EP-A- 0 762 145          FR-A- 2 738 919**
**US-A- 5 376 798**

• **PATENT ABSTRACTS OF JAPAN vol. 017, no. 412 (P-1583), 30 juillet 1993 & JP 05 080156 A (SHIMADZU CORP), 2 avril 1993**
• **asdf**

## Description

Domaine de l'invention

L'invention concerne un dispositif de mesure du temps de montée de signaux, parasités par des bruits, issus de détecteurs à semi-conducteur utilisés pour des rayonnements γ ou des rayonnements X.

L'invention trouve des applications dans le domaine de la spectrométrie en photon unique à savoir, la spectrométrie de rayonnements γ ou de rayonnements X lorsque le flux de rayonnements X est suffisamment faible pour permettre une détection de photon unique. En particulier, le dispositif de l'invention peut être intégré au sein du dispositif de correction de mesures spectrométriques décrit dans la demande de brevet français numéro FR-A-2 738 919.

Etat de la technique

De nombreux types de détecteurs destinés à la détection de rayonnements γ ou de rayonnements X de faible flux sont connus de l'homme de l'art. En particulier, les détecteurs à base de semi-conducteurs (CdTe ou CdZn Te) sont bien connus de l'homme de l'art.

Bien que ces détecteurs soient surtout adaptés à la détection des photons γ, ils permettent également la détection de rayonnements X, dans le cas où les rayonnements X sont de faible flux. Aussi, dans la suite de la description, seul le cas des rayonnements γ sera décrit, étant entendu qu'il peut aussi s'agir de rayonnement X de faible flux.

Les détecteurs à semi-conducteurs CdTe ou CdZnTe ont l'avantage de réaliser directement la conversion en énergie du rayonnement γ dans la matière semi-conductrice, sans passer par des étapes intermédiaires, comme l'émission de photons visibles dans le cas des scintillateurs. On s'affranchit ainsi des problèmes de couplage synonymes de perte de rendement. L'énergie nécessaire pour créer une paire électron-trou dans un semi-conducteur est beaucoup plus faible que dans un gaz ou dans un scintillateur (environ 4eV dans les semi-conducteurs, contre 30eV dans les gaz, et 300eV dans les systèmes scintillateur photomultiplicateur). En conséquence, le nombre de charges libres créées par photon détecté est plus important, ce qui permet d'obtenir de meilleures résolutions en énergie. De plus, le numéro atomique et la densité élevés des matériaux semi-conducteurs permettent d'utiliser des volumes de détection nettement inférieurs à ceux des détecteurs à gaz ou des scintillateurs, tout en conservant la même efficacité quantique de détection.

L'utilisation de ces matériaux semi-conducteurs comme détecteurs de rayonnement X ou γ implique le dépôt de deux contacts électriques à la surface du matériau, aux bornes desquels une tension de polarisation est appliquée. Les porteurs de charges, c'està-dire les paires électron-trou créées par l'interaction du photon γ avec le matériau, vont se séparer sous l'action du champ électrique, les électrons migrant vers l'électrode positive et les trous vers l'électrode négative. L'aptitude de ces porteurs de charge à migrer vers les électrodes sans se faire piéger par des défauts présents dans le matériau semi-conducteur conditionne la résolution en énergie du spectre mesuré. Cette aptitude, appelée aussi propriété de transport des porteurs de charge, est mesurée par la mobilité et la durée de vie des électrons et des trous.

Lorsque le produit mobilité x durée de vie est comparable ou inférieur au temps de migration des porteurs de charges vers les électrodes, la résolution en énergie est médiocre.

De nombreuses méthodes ont été imaginées pour limiter le piégeage des trous, basées soit sur un effet de champ électrique, soit sur un effet géométrique, ou bien encore sur une mesure de corrélation amplitude-temps de montée, le signal détecté étant alors la somme de la charge du trou et de celle de l'électron.

Par ailleurs, la demande de brevet français FR-A-2 738 919 décrit un procédé d'exploitation du signal fourni par un détecteur à semi-conducteur, qui permet de s'affranchir des mauvaises propriétés de transport des trous en produisant un signal représentatif du temps de montée de la composante électronique du signal fourni par le détecteur, c'est-à-dire de la composante du signal total qui correspond à la collection des électrons provenant de l'interaction de chaque photon γ avec le matériau semi-conducteur.

Ce document décrit également un dispositif destiné à mettre en oeuvre cette exploitation de signaux.

Ce dispositif comporte différents moyens pour traiter analogiquement les signaux issus du détecteur dont un détecteur de crête à la sortie duquel est relié un discriminateur de montée vers la crête du signal ; ce discriminateur est réalisé au moyen d'un transistor qui charge un condensateur jusqu'au niveau crête du signal. La sortie de ce discriminateur est reliée à des moyens de détermination de l'instant de fin de montée.

Dans ce dispositif, un filtre passe-haut, placé en amont du détecteur de crête, a pour rôle d'assurer la transmission du signal d'entrée. Ce filtre passe-haut doit donc avoir une fréquence de coupure fc inférieure à $1/2 \pi t$, où t est le temps de montée maximum de la composante électronique du signal.

Pour une bonne efficacité de la correction électronique, il faut mesurer des temps de montée 3 à 10 fois plus faibles que le temps de montée maximum.

La mesure du temps de montée avec un détecteur de crête est très sensible aux signaux parasites, ce qui ne présente pas d'inconvénient lorsque le rapport signal/bruit est bon, mais qui peut être gênant dans le cas fréquent où ce rapport signal/bruit est médiocre, c'est-à-dire lorsque les signaux à mesurer sont perturbés par le bruit électronique.

Par ailleurs, une demande de brevet portant le numéro FR-A-2 738 693 décrit un dispositif de traitement d'informations provenant de l'interaction d'une particule γ avec un détecteur CdTe qui comprend un circuit d'amplitude permettant de déterminer l'instant de début de la mesure du temps de montée d'une impulsion et un circuit de temps permettant de détecter la fin du temps de montée de l'impulsion.

Cependant, ce dispositif n'est efficace que dans le cas où le signal d'entrée monte relativement lentement et est très peu parasité.

Or, dans la pratique, les signaux récupérés en sortie des détecteurs sont très faibles (de l'ordre de $10^{-15}$ à $10^{-19}$ coulomb) et les bruits parasites sont du même ordre de grandeur, voire plus importants (ces bruits peuvent être affaiblis par un filtrage).

Exposé de l'invention

L'invention a justement pour but de remédier aux inconvénients des dispositifs décrits précédemment en proposant un dispositif qui permet de mesurer de façon plus précise que les dispositifs antérieurs, le temps de montée de signaux perturbés par des bruits électroniques dont le rapport signal/bruit est médiocre.

Le dispositif de l'invention permet de s'affranchir des bruits parasites par un filtrage fréquentiel, suivi d'un filtrage temporel adapté c'est-à-dire d'un filtrage dans lequel le gain de la chaîne d'amplification est adapté aux caractéristiques temporelles du signal à mesurer et qui indique la durée du temps de montée du signal à mesurer.

De façon plus précise, l'invention concerne un dispositif de mesure du temps de montée de la composante électronique d'un signal parasité par des bruits électroniques comme il est défini dans la revendication 1.

Selon un mode de réalisation de l'invention, le circuit discriminateur comporte une source de tension de décalage connectée sur la borne négative du comparateur, la borne positive dudit comparateur recevant le signal obtenu en sortie du circuit différentiateur.

Selon un autre mode de réalisation de l'invention :

-   le circuit discriminateur comporte une source de tension de référence connectée en série sur une résistance d'atténuation, elle-même connectée sur la borne négative du comparateur ;
-   le circuit différentiateur résulte de la connexion, sur la borne négative du comparateur, de la sortie d'un circuit RC passe bas et de la connexion, sur la borne positive du comparateur, du signal issu directement du détecteur.

Brève description des figures

-   - Les figures 1A et 1B représentent schématiquement deux variantes du schéma de câblage du dispositif de mesure du temps de montée, conformément au premier mode de réalisation ;
-   la figure 2 représente le chronogramme des signaux obtenus pour le dispositif de la figure 1 ;
-   les figures 3A et 3B représentent schématiquement deux variantes du schéma de câblage du dispositif de mesure du temps de montée, conformément au second mode de réalisation ; et
-   la figure 4 représente le chronogramme des signaux obtenus pour le dispositif de la figure 3.

Description détaillée de modes de réalisation de l'invention

Le dispositif de mesure du temps de montée de la composante électronique d'un signal issu d'un détecteur à semi-conducteur, conforme à l'invention, comporte des moyens pour effectuer un filtrage fréquentiel de cette composante électronique et des moyens pour effectuer un filtrage temporel adapté de ladite composante électronique.

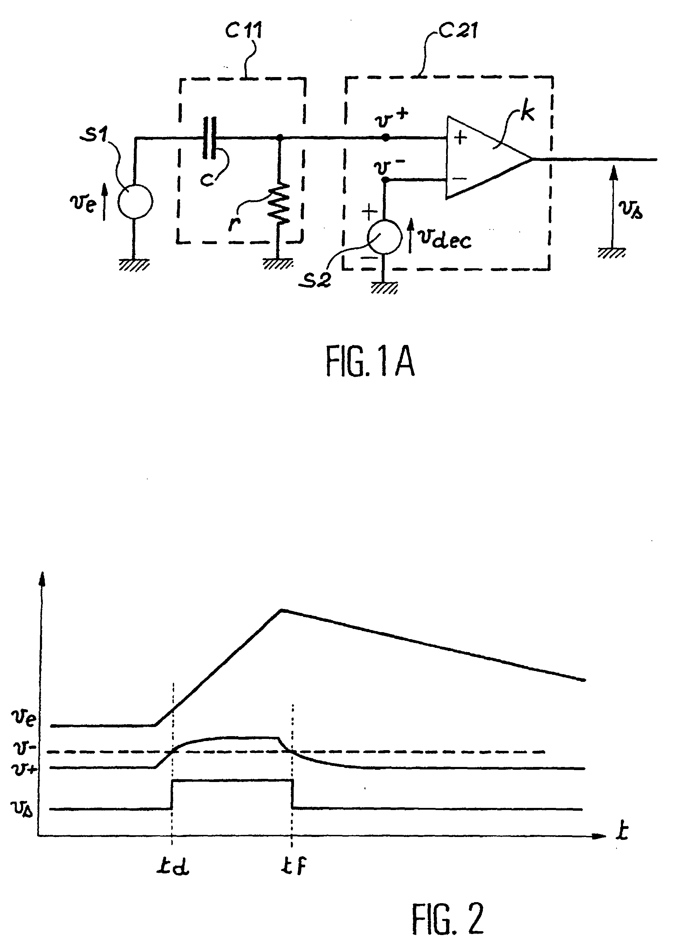

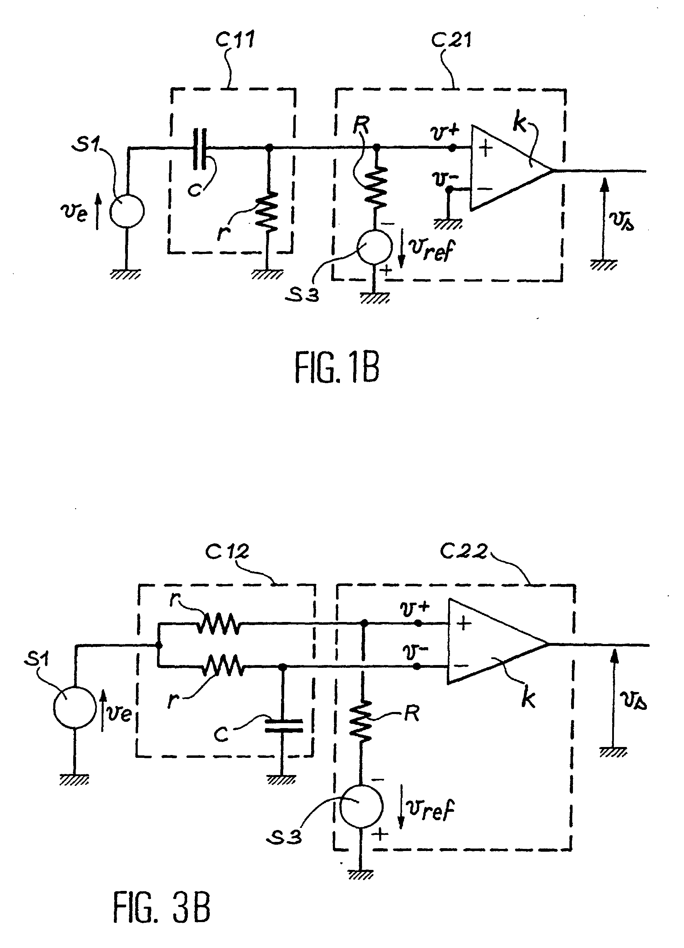

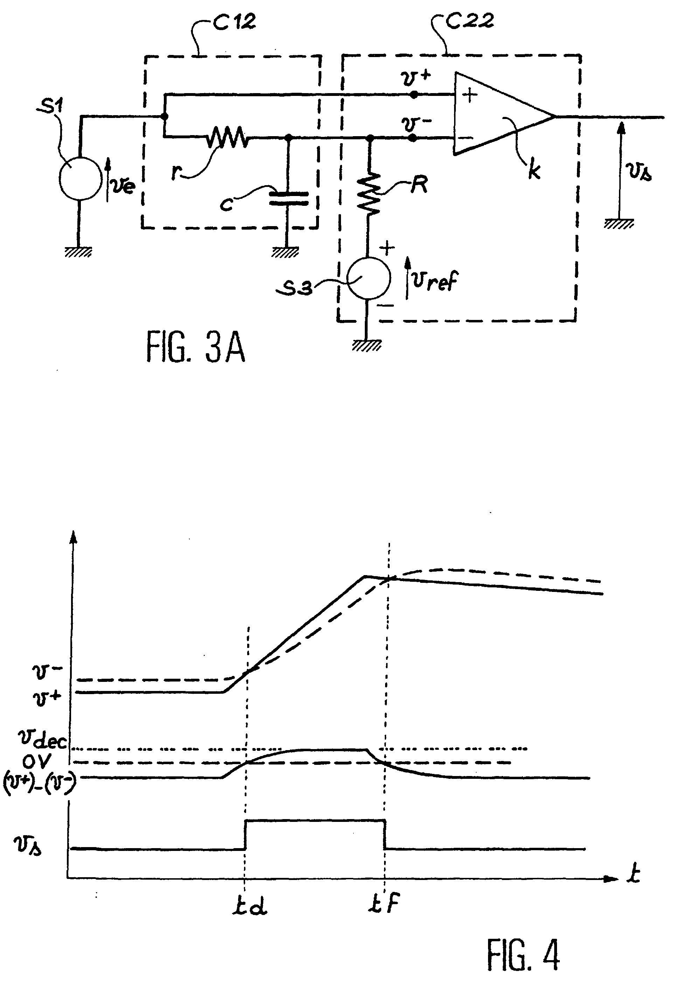

Les moyens de filtrage fréquentiel consistent en un circuit différentiateur référencé, respectivement, C11 et C12 sur les figures 1A, 1B, 3A et 3B. Les moyens de filtrage temporel adapté consistent en un circuit discriminateur noté, respectivement, C21 et C22 sur les figures 1A, 1B, 3A et 3B ; la discrimination de montée est réalisée par comparaison de la variation temporelle de la tension, avec une tension fixe, appelée tension de seuil déterminée à partir de la pente de variation de la tension à mesurer et de la tension du bruit perturbateur (parasite). Sans rayonnement incident sur le détecteur polarisé, la tension de seuil est ajustée pour n'obtenir qu'un minimum "acceptable" de signal parasite.

Le circuit différentiateur (C11 ou C12) assure le filtrage des signaux parasites de basse fréquence du signal issu du détecteur. Pour cela, il comporte au moins une résistance r et un condensateur c réalisant un filtre passe-haut.

Ce filtre passe-haut permet une atténuation du bruit parasite, jusqu'à la fréquence de coupure :

$$f_c = \frac{1}{2\pi\tau},$$

où τ est un temps de retard (décrit plus précisément par la suite) inférieur au temps de montée minimum du signal. L'atténuation du bruit parasite de basse fréquence est réalisée jusqu'à la fréquence $\frac{1}{2\pi\tau}$. Dans la réalisation antérieure du document FR-A-2 738 919, l'atténuation du bruit parasite de basse fréquence va jusqu'à $\frac{1}{2\pi t_{max}}$. Or, $t_{max} > t_{min} > \tau$ : l'atténuation du bruit parasite de basse fréquence du dispositif de l'invention est plus importante que celle réalisée par le dispositif de l'art antérieur.

Sur les figures 1A et 1B, on a représenté un circuit différentiateur d'ordre 1, c'est-à-dire qui ne comporte qu'un seul circuit r/c. Toutefois, dans le cas des figures 3A et 3B ce circuit peut être réalisé au moyen de plusieurs étages r/c ou d'une ligne à retard (appelés, plus généralement, réseaux retardateurs).

Le circuit discriminateur (C21 ou C22) permet de comparer un signal d'entrée avec ce même signal décalé dans le temps (d'un temps $\tau$).

Sur la figure 1A, on a représenté un premier mode de réalisation du dispositif de l'invention. Dans ce mode de réalisation, le circuit discriminateur C21 comporte un comparateur k qui reçoit en entrée, sur sa borne positive (borne +), le signal obtenu en sortie du circuit différentiateur C11 et, sur sa borne négative (borne -), une tension de décalage $v_{dec}$ positive.

Le circuit différentiateur C11 comporte une résistance r et un condensateur c câblés sous forme de filtre passe-haut sur la borne positive (borne +) du comparateur k du circuit discriminateur. Le signal d'entrée $v_e$, issu du détecteur mais symbolisé sur la figure par la source S1, est filtré par le filtre r/c. Ainsi, seule la variation temporelle de la tension d'entrée $v_e$ (qui est la dérivée du signal d'entrée sur le temps $\tau$ et dont les bruits de basse fréquence ont été supprimés) est introduite, pour comparaison, dans le circuit discriminateur.

Le circuit différentiateur est adapté :

- d'une part, pour ne pas provoquer de mesures sur le signal parasite en l'absence de rayonnement ; et
- d'autre part, à l'évolution temporelle du signal utile et à la rejection du signal parasite lors de la mesure du temps de montée.

La sortie $v_s$ du comparateur k indique le temps de montée de la composante électronique du signal issu du détecteur.

La tension de décalage $v_{dec}$, produite par la source de tension S2, est adaptée à l'amplitude du bruit parasite du signal à traiter. Autrement dit, elle est choisie de façon que le bruit seul ne déclenche pas le comparateur k. Plus précisément, plus le bruit parasite est élevé, plus la tension de décalage émise par la source S2 est choisie élevée.

Cette tension de décalage $v_{dec}$ est comparée à la dérivée de la tension d'entrée ($\frac{dv_e}{dt}$) du dispositif retardée d'un temps $\tau$ (appelé aussi retard $\tau$).

Dans les applications de l'invention, ce retard $\tau$ équivaut à environ 1/10e du temps de montée maximum des électrons. Pour une détection de photon $\gamma$ d'énergie 150 kev, le temps de migration des électrons dans le détecteur est compris entre 1 $\mu$s et 0,2 $\mu$s. Sur la sortie $v_s$, la différente tf - td mesure ce temps de migration (cf. figure 4).

En d'autres termes, les retards $\tau_d$ et $\tau_f$ produits par ce circuit différentiateur sur td et tf sont comparables et de l'ordre de r x c. En première approximation, rf compense rd.

La figure 1B représente une variante du circuit de la figure 1A, selon laquelle la borne + du comparateur k reçoit une tension $V_{ref}$ négative ; une résistance R est alors rajoutée entre la borne + du comparateur k et la source de tension $V_{ref}$.

Sur la figure 2, on a représenté l'évolution temporelle des signaux obtenus dans le dispositif de la figure 1. Plus précisément, ce chronogramme montre la tension d'entrée $v_e$ du dispositif, les tension $v^+$ et $v^-$ aux bornes + et - du comparateur et la tension de sortie $v_s$ du dispositif :

- la tension $v_e$ correspond à la composante électronique du signal issu du détecteur ;
- la tension $v^-$ est la tension $v_{dec}$ émise par la source S2 ;
- la tension $v^+$ est la tension obtenue en sortie du filtre réalisé par r/c ; et
- la tension $v_s$ correspond au signal obtenu après comparaison du signal $v^+$ avec le signal $v^-$ ; ce signal $v_s$ a, à l'instant td, un front de montée qui correspond à l'instant de début du temps de montée et, à l'instant tf, un front de descente qui correspond à l'instant de fin du temps de montée du signal $v_e$.

La figure 3A montre un second mode de réalisation du dispositif de l'invention. Dans ce mode de réalisation, le circuit discriminateur C22 comporte un comparateur k dont la borne + reçoit le signal d'entrée $v_e(t)$ et la borne - reçoit un signal appelé $v^-$ et qui équivaut à :

$$v = v_e(t-\tau) + v_{dec}.$$

Plus précisément, la borne - du comparateur k reçoit, d'une part, la tension de référence $v_{ref}$ provenant de la source de tension S3 et amortie par la résistance d'amortissement R et, d'autre part, la tension obtenue sur une des deux sorties du circuit différentiateur C12, c'est-à-dire le signal d'entrée $v_e(t-\tau)$ retardé de $\tau$ par rapport au signal d'entrée $v_e(t)$.

Dans ce mode de réalisation, la tension de décalage est réglée par l'intermédiaire de la tension de référence $v_{ref}$ avec $v_{ref} = \frac{R+r}{r}.v_{dec}$ avec R >> r.

Le circuit différentiateur C12 comporte une résistance r et un condensateur c câblés en filtre passe-bas sur la borne négative (borne -) du comparateur k. En pratique, une des sorties du circuit différentiateur C12 est connectée sur la sortie de la résistance d'atténuation R, l'autre sortie étant connectée sur la borne positive du discriminateur.

Dans ce second mode de réalisation, on réduit l'influence du bruit parasite en diminuant le retard $\tau$.

La figure 3B représente une variante du circuit de la figure 3A, selon laquelle la tension $V_{ref}$ est négative et introduite sur la borne + du comparateur k ; une résistance r est alors ajoutée entre la source de tension $V_e$ et ladite borne +.

Dans les deux modes de réalisation de l'invention (figures 1A/B et figures 3A/B), la tension observée par le comparateur k est la tension aux bornes de la résistance r : dans le premier mode de réalisation, cette tension est observée directement tandis que dans le second mode de réalisation, elle est observée en différentiel par le comparateur.

Dans les deux modes de réalisation, le circuit différentiateur a été réalisé au moyen d'un seul étage r/c ; toutefois, dans le second mode de réalisation illustré par les figures 3, il peut être réalisé au moyen de deux, ou de plusieurs étages r/c ou au moyen d'une ligne à retard caractérisée par son retard $\tau$.

Sur la figure 4, on a représenté l'évolution temporelle des différentes tensions parcourant ce dispositif. Plus précisément, on a représenté :

- la tension $v^+$, à la borne positive du comparateur k : $v^+ = v_e(t)$ ;
- la tension $v^-$, à la borne négative du comparateur k : $v^- = v_e(t - \tau) + v_{dec}$ ;
- la tension $v_{dec}$ exprime le décalage de tension entre $v^+$ et $v^-$, $(v^+ - v^-)$, observé en l'absence de signal d'entrée ;
- la tension $(v^+) - (v^-)$ ; et
- la tension $v_s$ obtenue en sortie du comparateur k. Ce signal $v_s$ comporte un front montant et un front descendant qui correspondent, respectivement, aux instants de début et de fin de montée de la composante électronique du signal issu du détecteur.

## Revendications

1. Dispositif de mesure du temps de montée de la composante électronique d'un signal parasité par des bruits électroniques, obtenu en sortie d'un détecteur à semi-conducteur, en réponse à l'interaction d'un photon avec le matériau semi-conducteur du détecteur, le dispositif de mesure comprenant un circuit différentiateur (C11, C12) comportant un filtre passe-haut pour filtrer les bruits parasites de basse fréquence du signal issu du détecteur et un circuit discriminateur (C21, C22), **caractérisé en ce que** le circuit discriminateur (C21, C22) comprend un comparateur (k) pour effectuer une comparaison entre le signal filtré issu du circuit différentiateur et une tension de décalage choisie en fonction du niveau de bruit parasitant le signal issu du détecteur, de sorte que le signal de tension obtenu en sortie du comparateur ait un front montant et un front descendant qui correspondent, respectivement, aux instants de début et de fin de montée de la composante électronique du signal issu du détecteur.

2. Dispositif selon la revendication 1, **caractérisé en ce que** le circuit discriminateur (C21) comporte une source de tension de décalage (S2) connectée sur la borne négative du comparateur, la borne positive dudit comparateur recevant le signal obtenu en sortie du circuit différentiateur (C11).

3. Dispositif selon la revendication 1, **caractérisé en ce que** :

- le circuit discriminateur (C22) comporte une source de tension de référence (S3) connectée en série sur une résistance d'atténuation (R), elle-même connectée sur la borne négative du comparateur ;
- le circuit différentiateur (C12) est connecté sur les entrées du circuit discriminateur (C22) ;
- la borne positive du comparateur reçoit directement le signal issu du détecteur ; et
- la borne négative du comparateur reçoit un signal retardé par un réseau retardateur (de retard $\tau$).

4. Dispositif selon l'une quelconque des revendications précédentes, **caractérisé en ce que** le filtre passe-haut comprend au moins une résistance (r) et un condensateur (C).

## Patentansprüche

1. Vorrichtung zum Messen der Aufsteigzeit der elektronischen Komponente eines durch elektronische Geräusche verrauschten Signals, erhalten am Ausgang eines Halbleiterdetektors als Reaktion auf die Wechselwirkung eines Photons mit dem Halbleitermaterial des Detektors, wobei die Messvorrichtung eine Differenzierschaltung (C11, C12), die ein Hochpassfilter enthält, um die Störgeräusche niederer Frequenz des von dem Detektor stammenden Signals zu filtem, und eine Diskriminatorschaltung (C21, C22) umfasst,
**dadurch gekennzeichnet,**
**dass** die Diskriminatorschaltung (C21, C22) einen Komparator (k) enthält, um einen Vergleich durchzuführen zwischen dem von der Differenzierschaltung stammenden gefilterten Signal und einer Verschiebungsspannung, gewählt in Abhängigkeit von dem Störgeräuschpegel des von dem Detektor stammenden Signals, so dass das am Ausgang des Komparators erhaltene Spannungssignal eine aufsteigende Front und eine absteigende Front hat, die jeweils den Aufsteiganfangs- und -endzeitpunkten der elektronischen Komponente des von dem Detektor stammenden Signals entsprechen.

2. Vorrichtung nach Anspruch 1, **dadurch gekennzeichnet, dass** die Diskriminatorschaltung (C21) eine Verschiebungsspannungsquelle (S2) umfasst, verbunden mit dem negativen Anschluss des Komparators, wobei an den positive Anschluss des genannten Komparators das am Ausgang der Differenzierschaltung (C11) erhaltene Signal angelegt wird.

**3.** Vorrichtung nach Anspruch 1, **dadurch gekennzeichnet:**

- **dass** die Diskriminatorschaltung (C22) eine Bezugsspannungsquelle (S3) umfasst, in Reihe geschaltet mit einem Dämpfungswiderstand (R), der mit dem negativen Anschluss des Komparators verbunden ist;
- **dass** die Differenzierschaltung (C12) mit den Eingängen der Diskriminatorschaltung (C22) verbunden ist;
- **dass** der positive Anschluss des Komparators das von dem Detektor stammende Signal direkt erhält; und
- **dass** der negative Anschluss des Komparators ein durch ein Verzögerungsnetz (der Verzögerung $\tau$) verzögertes Signal erhält.

**4.** Vorrichtung nach einem der vorangehenden Ansprüche, **dadurch gekennzeichnet, dass** das Hochpassfilter wenigstens einen Widerstand (r) und einen Kondensator (C) umfasst.

**Claims**

**1.** Device for measuring the rise time of the electronic component of a signal disturbed by electronic noise, obtained at the output of a semiconductor device, in response to the interaction of a photon with the semiconductor material of the detector, the measuring device comprising a differentiating circuit (C11, C12) having a high pass filter for filtering the low frequency background noise from the signal obtained from the detector and a discriminating circuit (C21, C22), **characterized in that** the discriminating circuit (C21, C22) comprises a comparator (k) for carrying out a comparison between the filtered signal from the differentiating circuit and an offset voltage chosen as a function of the noise level interfering with the signal from the detector, so that the voltage signal obtained at the output of the comparator has a rising front and a falling front corresponding respectively to the start and end of rise times of the electronic component of the signal from the detector.

**2.** Device according to claim 1, **characterized in that** the discriminating circuit (C21) incorporates an offset voltage source (S2), connected to the negative terminal of the comparator, the positive terminal of said comparator receiving the signal obtained at the output of the differentiating circuit (C11).

**3.** Device according to claim 1, **characterized in that**:

- the discriminating circuit (C22) incorporates a reference voltage source (S3) connected in series to a damping resistor (R), which is itself connected to the negative terminal of the comparator,
- the differentiating circuit (C12) is connected to the inputs of the discriminating circuit (C22),
- the positive terminal of the comparator directly receives the signal from the detector and
- the negative terminal of the comparator receives a signal delayed by a delay network (lag $\tau$).

**4.** Device according to any one of the preceding claims, **characterized in that** the high pass filter comprises at least one resistor (r) and a capacitor (C).

FIG. 1A

FIG. 2

FIG. 1B

FIG. 3B

FIG. 3A

FIG. 4